# EUROPEAN PATENT APPLICATION

(11) **EP 4 459 846 A1**
(43) Date of publication of application: **06.11.2024**
(21) Application number: 24460018.5
(22) Date of filing: 19.04.2024
(51) Int. Cl.: H02K 3/28, H02K 17/42, H02K 17/16

(54) **BRUSHLESS DOUBLY FED INDUCTION GENERATOR WITH CONTROL WINDING AND ROTOR**

(30) Priority: 24.04.2023 PL 44454423
(71) Applicant: Politechnika Gdanska, 80-233 Gdansk (PL)
(72) Inventor: Blecharz, Krzysztof, 80-180 Gdansk (PL); Michna, Michal, 81-589 Gdansk (PL); Kutt, Filip, 80-288 Gdansk (PL); Ryndzionek, Roland, 80-174 Gdansk (PL); Kostro, Grzegorz, 80-398 Gdansk (PL)
(74) Representative: Pawlowska-Bajerska, Justyna

(57) **Abstract**

The subject matter of the invention is that a brushless doubly-fed induction generator with a movable external rotor and a fixed internal stator circuit with at least two windings is equipped with a fixed three-phase power winding S1 and a five-phase control winding. The three-phase stator power winding is connected directly to the three-phase power supply network, while the five-phase control winding is powered by a bidirectional power electronic converter. The five-phase stator's control winding is supplied by a five-phase power electronic converter with a constant number of phases in the three-phase stator power winding equal to three.

## Description

The invention relates to brushless doubly-fed induction generator - doubly-fed brushless induction with an external rotor and a multiphase control winding for use in a wind turbine.

Wind power generation is a proven and widely used method for producing electricity without harmful carbon emissions. Turbines with capacities up to several megawatts are commonly used. Electromechanical converters such as classical synchronous generators, permanent magnet synchronous generators, and induction generators are used. An alternative to magnet-based generators are synchronous generators without magnets. Efficient and reliable electricity generation over a wide range of speed variations is sought due to the nature of wind turbine operation. Therefore, a popular solution in wind turbines is a doubly-fed induction generator, which can be successfully used in a wind turbine or other industrial solutions.

Brushless doubly-fed induction generators with an internal rotor are known, e.g. in US 2014/0145541 A1, WO2005/0460644 A1; US5083077A; WO 2009/150464 and with an external rotor described e.g. in CN201045750Y; CN1674415A, which consist of three main circuits: a stator with a three-phase power winding connected to the power grid, a movable rotor circuit with a three-phase short-circuited winding and a second independent stationary three-phase control circuit located on the stator.
The three-phase stationary winding of the stator power winding is connected directly to the power grid. The second independent stationary three-phase stator control winding is supplied by a power electronic converter with bi-directional power flow, which adapts the required winding supply frequency to the actual rotor speed. The generator rotor, which has a multiphase short-circuited winding, is a rotating element that magnetically couples the stationary power and control windings to the stator.

The key advantage of the brushless doubly-fed induction generator is its ability to independently control active and reactive power on the three-phase power winding side of the stator through the five-phase control winding, which is also located on the stator.
The second significant advantage is the ratio of power returned to the grid from the stator power winding to the power of the stator control winding. This ratio is typically 3:1, resulting in lower converter power requirements compared to other variable-speed generator solutions.
Undoubtedly, the most significant advantage of a doubly-fed brushless induction generator is the ability to operate in a wide range of changes in the rotational speed of the machine shaft (typically from 0.7 to 1.3 synchronous speed) and suitable technical parameters of the quality of energy transferred to the grid. These functions are very beneficial due to maximising energy obtained from the wind, especially for high-power generators. Hence, solutions with even better parameters and construction, such as brushless generators, are being sought.

The disadvantages of existing brushless generator machines - solutions, both in the internal and external rotor configuration, are the inability to continue operation in the event of a failure in at least one of the branches of the converter supplying the three-phase circuit of the control winding and the sensitivity to voltage disturbances on the side of the power winding connected directly to the power grid. Therefore, the goal of the invention is still to find better solutions that do not have these inconveniences.

The purpose of this invention was to provide a generator without disadvantages of the known generator. The goal was to provide generator with external rotor that could be connected to a wind turbine, since such generator enabling the blades to be mounted directly on the rotating element of the rotor.

The described invention is based on the known structures of the double-fed induction generator presented above; however, it allows using a five-phase control winding placed on the internal stator in the invention's structure instead of the classic three-phase one. The control winding of the internal stator is powered by a dedicated five-phase power electronic converter. The generator's external shorted rotor is not directly powered. The current flow in the rotor results from the supply of the five-phase control winding from the converter and the three-phase power winding from the power grid.

The subject matter of the invention is that a doubly-fed brushless induction generator with a movable external rotor and an internal stator circuit with at least two windings is equipped with - comprising a fixed three-phase power winding S1 and a five-phase control winding. The three-phase power winding on the stator is connected directly to the three-phase power grid, while the five-phase control winding is supplied by a power electronic converter with bidirectional power flow. The five-phase stator control winding is powered by a five-phase power electronic converter with a constant number of phases in the three-phase stator power winding equal to three.

Preferably, the three-phase power winding is constructed, arranged such that it prevent magnetic coupling with the five-phase control winding - between three and five-phase control winding. In three-phase control winding there is a coil span - so it uses a coil span equal to the number of slots per pole and phase of this winding.

Preferably, the stator slots Qs with the three-phase power winding and the five-phase control winding must be - are divisible - are dividable by the natural number 3 and 5 without remainder - rest/change and are not equal to the rotor slots Qr in which the three-phase and five-phase control windings are placed.

Preferably, the generator comprising - is equipped with a fixed three-phase power winding on the internal stator -non-movable - immobile - immovable - stationary, a fixed - stationary five-phase control winding on the internal stator, a rotating - mobile/movable winding short-circuited - concrete in the outer rotor, and comprising a five-phase power electronic converter.

Preferably, the core of the internal stator is a stationary element - not movable - made of electrotechnical sheet packages embedded - that is placed-positioned in the generator's supporting structure.

Preferably, in the stator slots with the number Qs, there is a two-layer three-phase power winding with the number of pole pairs p1 of 5 - p1=5, and a single-layer five-phase control winding with the number of pole pairs p2 of 3 - p2=3.

Preferably, the outer rotor is a hub to which three wind turbine blades are directly mounted - in the number 3.

According to the invention, 5-phase windings are used on the control side. The stator windings (power and control windings) are doubly-layered with a coil span number corresponding to the number of slots per pole and phase. This enable to eliminate direct coupling of the windings.

The use of a five-phase control winding in the internal stator instead of a three-phase winding increases the reliability of the generator and reduces service and inspection costs. The system can operate even if two phases of the stator control winding are damaged or if the converter branches are damaged. The invention enable to have low sensitivity to voltage disturbances on the stator power winding side. As a result, voltage disturbances on the stator side and the inability to continue operation in the event of failure of at least one of the branches of the converter supplying the control winding circuit have been eliminated.
The generator with a five-phase control winding in the internal stator and a short-circuited winding in the external rotor is also characterised by better parameters of the quality of energy transferred to the grid. This quality of energy is due to the possibility of generating additional voltage harmonics on the side of the stator power winding to compensate for interference from the power grid or asymmetry of the machine's magnetic circuit.

The generator according to the invention is described in more detail in the examples - embodiments and in the drawing, where Fig. 1 shows a diagram of the generator, Fig. 2 shows a cross-section of the generator, Fig. 3 shows a complete diagram of the two-layer power winding S1of the generator with the number of pole pairs p1 = 1 stator Qs arranged in slots in the known notation; Fig. 4 shows a complete diagram of the single-layer five-phase control winding S2of the generator with the number of pole pairs p2 = 3, arranged in the stator slots Qs in the known notation; Fig. 5 shows a method of placing a double-layer power winding S1 and a method of placing a single-layer control winding S2 in the slot of the generator stator.

### Figure markings:

- 1-: stator,
- 2-: rotor,
- 3-: shaft,
- 4-: fixed three-phase power winding S1
- 5-: fixed five-phase control winding S2,
- 6-: rotating short-circuited winding W1,
- 7-: five-phase power electronic converter 7,
- 8-: blade mounting hooks,
- 9-: wind turbine blades
- 10-: rotor housing

### Example

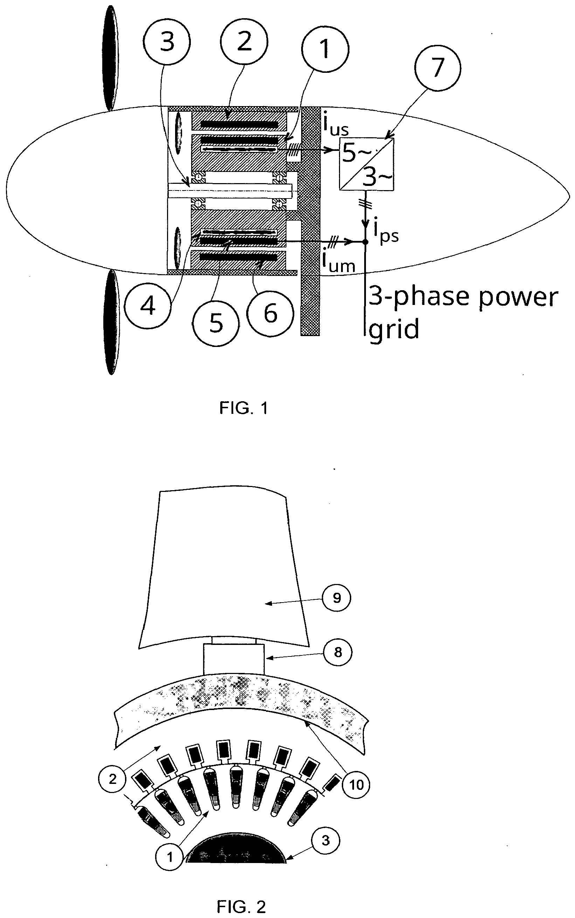

As shown in Fig. 1, the doubly-fed induction generator has a cylindrical structure. It is composed - comprises - of the following structural elements: inner stator 1, outer rotor 2, generator shaft 3, fixed three-phase power S1 winding 4 - stationary three-phase winding 4 power S1 - on stator 1, fixed five-phase control winding 5 - S2 - on the stator 1 - control - steer winding, rotating winding 6 short-circuited in the outer rotor 2, integrated five-phase power electronic converter 7.

The stator core 1 is a stationary element of electrotechnical sheet packages mounted on the stationary generator shaft.

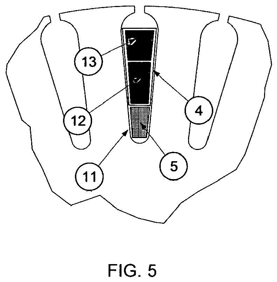

As shown in Fig. 5, In the stator 1 slots - stator's slots, with the number Qs, there is a stationary two-layer three-phase power winding 2 S1 with the number of pole pairs p1=5 and a single-layer five-phase control S2 winding 5 with the number of pole pairs p2=3.

In the theory of electric machines, the type designation such as Qs is standardly, generally used, known and refers to the number of stator 1 slots located around the perimeter of the electrotechnical sheet stack.
Fig. 2 shows a cross-section of the generator through the stationary shaft 3, the internal magnetic circuit of the stator 1, the movable magnetic circuit of the rotor 2, and the movable rotor casing 10, on which mounting hooks are used for 8 blades 9 in the number of 3 wind turbine blades.

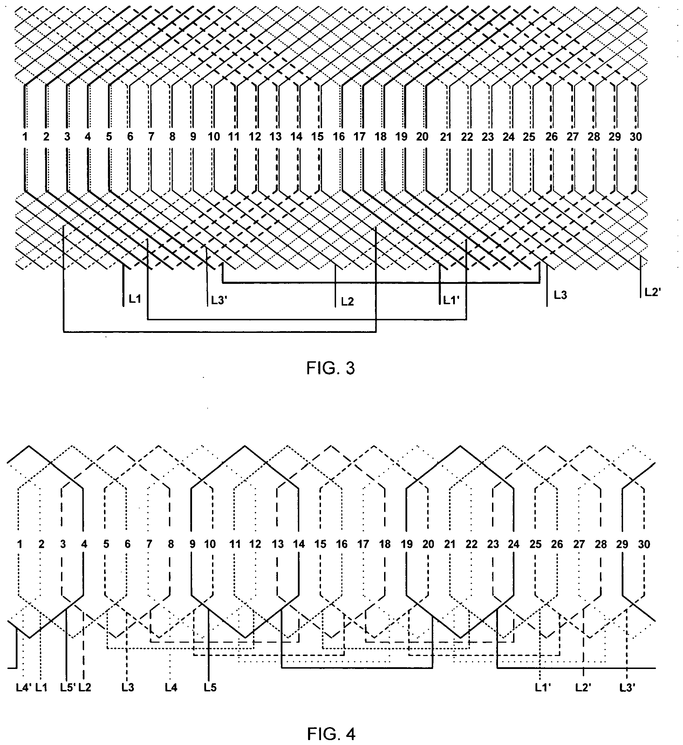

Fig. 3 shows the complete diagram of the two-layer, S1, three-phase power winding, 4, of the generator with the number of pole pairs p1 = 1, arranged in the Qs slots of stator 1, where the beginnings of the windings 4 begin, the individual phases are marked L1, L2, L3, and the ends L1', L2', L3. '.
Fig. 4 shows the full diagram of the single-layer, S2, five-phase control winding, 5, of the generator with the number of pole pairs p2 = 3 arranged in the slots Qs of stator 1. The beginnings of the windings of individual phases are marked L1, L2, L3, L4, L5, and the ends L1', L2. ', L3', L4', L5'.

The number of slots Qs of stator 1 is a multiple of the number of phases, what means 3 and 5.

The stationary - not movable - three-phase power S1 winding 4 is magnetically coupled to the control winding 5 - S2 through the movable, rotating short-circuit winding W1 of rotor 2. It is essential that the number of rotor slots Qr was different from the stator slots Qs. Additionally, the number of nurseries must be even.

The short-circuited W1 winding 6 is placed in the outer rotor 2 and must have a number of poles equal to the sum of the number of pairs of poles of the control winding and the power winding - (p1 + p2)/2. In the terminology of electrical machines, a compact winding means that the beginnings and ends of the windings are permanently connected.

Fig. 5 shows a view of one slot 11 of the internal stator, in which three layers of windings are placed: one two-layer three-phase power winding 4 S1, which is divided into the upper part of the power winding 13, the lower part of the stationary three-phase power S1 winding 4 12. In the remaining part of the slot, there is a single-layer, five-phase control winding 5.

To eliminate magnetic coupling between the two-layer power 4 winding S1, and the control winding 5 - S2, a coil span abbreviation was used in the two-layer three-phase power S1 winding, equal in value to the number of slots Qs of the winding divided by the number of phases and the number of poles of this winding. In the example, therefore, the three-phase power S1 winding 4 is distributed, arranged in such a way as to eliminate magnetic coupling between the three-phase power S1 winding 4 and the five-phase control winding 5 - S2, in the three-phase power S1 winding 4 an abbreviation of the coil span equal in value to the number of slots per pole and phase of this winding.

The three-phase power S1 winding designed this way eliminates the possibility of magnetic coupling between it and the five-phase control winding S2. It also eliminate the influence of the third harmonic in the power S1 winding in the case of the configuration of the number of pole pairs of the power windings (one pair of poles) and the control winding (three pairs of poles).

In this example, the number of slots Qs of stator 1 is 30, while the number of slots Qr of the rotor is 24. The S1, fixed three-phase power winding 4 is distributed evenly around the circumference of stator 1. A single phase of the power winding occupies 20 slots of the stator, 1 - 10 upper layers, and 10 middle layers of the slot, giving a coil shortcut of 5. The S2, five-phase control winding 5 is distributed evenly in all the lower layers of the stator slots 1. A single coil of each phase occupies 2 slots (beginning and end), and the entire single phase has 6 slots (evenly every 72 degrees).

The beginning and end of the three-phase power S1 winding 4 of stator 1 and the five-phase control winding 5 - S2 of stator 1 are connected to a terminal board inside the nacelle. The three-phase power S1 winding 4 of the stator is connected to the power grid, while the five-phase control winding 5 - S2 of stator 1 is powered by the power electronics converter 7.

The outer rotor 2 is the machine's rotating element. Its magnetic core is made of packages of electrotechnical sheets with a number of slots equal to Qr, in which a winding made of copper rods is placed.

The ends and beginnings of all phases of the winding W1 of rotor 3 are permanently connected to each other, creating a short-circuited concentric winding W1.

The ends and beginnings of all phases of the winding W1 of rotor 3 are permanently connected to each other, creating a short-circuited concentric winding W1. Due to the principle of operation of a brushless doubly-fed induction generator with a multiphase rotor winding W1 and control winding 5 - S2 of stator 1, the power electronic converter 7 supplies - energizes the control winding and delivers power to the rotor winding.

Depending on the adopted configuration, the power electronic converter 7 is an adjustable voltage or current source supplying the five-phase stator control circuit.

The power electronic converter 7 in the stator control winding S2 basically consists of two frequency converters, a machine one and a grid side one, connecting a three-phase electrical network with a constant voltage frequency of 50 Hz with a five-phase generator control circuit in which electric signals are characterised by variable frequency. The task of the converter is to power the rotor circuit by changing the voltage or current at the terminals of the stator control winding, taking into account changes in the frequency of electrical signals resulting from the principle of operation of the generator and the changing rotational speed of the generator shaft. A characteristic feature of the power electronic converter is four-quadrant operation, which requires the flow of electricity in the direction from the mains-supplied stator power winding through the short-circuit winding of the machine rotor to the stator control winding and in the opposite direction.

The generator's condition is determined by the machine's operating point. In the scope of generator operation in the stator circuit, the direction of the current in the iᵤₛ power winding remains unchanged, i.e. from the generator to the power grid, while the direction of current flow in the iᵤₛ control winding circuit. Thus, the current of the iₚₛ power converter depends on the actual rotational speed of the external rotor generator relative to the magnetic field of stator 1.

### Example 2

The invention is constructed similar as described in Example 1, except that the outer rotor is a hub to which 3 wind turbine blades are directly mounted. In Fig. 2, the hub housing is marked with the number 10, and an exemplary drawing of the mounting hook 8 and the turbine blade 9 is shown.

## Claims

1. Brushless doubly fed induction generator with a movable rotor (3) and a stationary circuit of stator (1) with at least two windings, **characterised in that** it comprises an external rotor (3) and a stationary internal circuit and is equipped with a stationary three-phase winding (4) power (S1) and a five-phase control winding (5), where the three-phase power (S1) winding (4) of the stator (1) is connected directly to the three-phase power supply network, while the five-phase control (S2) winding (5) is energized by the power converter (7) with bidirectional power flow, wherein the five-phase control (S2) winding (5) of the stator (1) is energized by a power electronic converter (7) made in a five-phase configuration with an unchanged number of phases in the three-phase power (S1). winding (4) of the stator equal to three, and the short-circuited winding (W1) placed in the outer rotor (2) has a number of poles equal to the sum of the number of pole pairs of the control winding and the power winding such as (p1 + p2)/2.

2. Generator according to claim 1, wherein the three-phase power (S1) winding (4) is arranged in such a way as to eliminate magnetic coupling between the three-phase power (S1) winding (4) and the five-phase control (S2) winding (5) and in the winding In the three-phase power (S1) winding (4) a shortening of the coil span is used that is equal in value to the number of slots per pole and phase of this winding.

3. Generator according to claim 1, wherein the number of slots Qs of the stator (1), in which three-phase windings (3) and five-phase control winding (5) are placed is divisible without remainder by the natural numbers 3 and 5 and is different that the number of rotor slots Qr.

4. Generator according to claims 1-3, wherein it comprises stationary three-phase power (S1) winding (4) on the internal stator (1), stationary five-phase control (S2) winding (5) on the internal stator (1), rotating winding (W1) short-circuited (6) in the external rotor (3), five-phase power electronic converter (7).

5. Generator according to claims 1-4, wherein the core of the internal stator (1) is immovable element made of electrotechnical sheet packages embedded in the generator's supporting structure.

6. Generator, according to claims 1-5, wherein in the slots of the stator (1) with the number Qs there is a two-layer three-phase power (S1) winding (4) with the number of pole pairs p1 and a single-layer five-phase control (S2) winding ( 5) with the number of pole pairs p2.

7. Generator according to claims 1-6, wherein the outer rotor (3) sets a hub to which three wind turbine blades are directly mounted.

8. Generator according to claims 1-7, wherein the magnetic core of the rotor is made of electrotechnical sheet packages with a number of slots equal to Qr, in which a winding made of copper rods is placed.

9. Generator according to claims 1-8, wherein the ends and beginnings of all phases of the winding (W1) of the rotor (3) are permanently connected creating short-circuited concentric winding W1.
